# EUROPEAN PATENT APPLICATION

(11) **EP 4 446 875 A1**
(43) Date of publication of application: **16.10.2024**
(21) Application number: 22916281.3
(22) Date of filing: 01.09.2022
(51) Int. Cl.: G06F 8/65, G06F 8/61, G06F 9/54, G06F 9/451, G06F 11/32, H04L 12/28, H04L 67/00

(54) **METHOD FOR UPGRADING HOME APPLIANCE, AND DEVICE FOR IMPLEMENTING SAME**

(30) Priority: 31.12.2021 KR 20210194529; 21.01.2022 KR 20220009432
(71) Applicant: LG Electronics Inc., Yeongdeungpo-gu Seoul 07336 (KR)
(72) Inventor: KANG, Obyoung, Seoul 08592 (KR); LEE, Sangmin, Seoul 08592 (KR); HONG, Seung Kyu, Seoul 08592 (KR); LEE, Younghun, Seoul 08592 (KR); KIM, Yong Joon, Seoul 08592 (KR); LEE, Sangwoon, Seoul 08592 (KR)
(74) Representative: Vossius & Partner Patentanwälte Rechtsanwälte mbB
(86) International application number: PCT/KR2022/013108
(87) International publication number: WO 2023/128127

(57) **Abstract**

The present invention relates to a method for upgrading a home appliance and a device for implementing same. The method for upgrading a home appliance according to an embodiment of the present invention comprises the steps of: transmitting, by a management server, software to a home appliance; downloading, by the home appliance, the software from the management server; transmitting, by the management server, an output instruction message indicating an output of an installation notification of the software to the home appliance; and outputting, by the home appliance, the installation notification.

## Description

### [Technical Field]

The present disclosure relates to a method for upgrading for a home appliance and a technology for a device implementing the same.

### [Background Art]

Electric appliances such as home appliances and electronic products are placed and operated in various environments, and changes may occur in product structures or components based on the time of product shipment. For example, after a product is shipped and sold, there may be a request to upgrade a function or add a function to upgrade.

However, most home appliances update their firmware to solve product errors after product sales. After the product is shipped, in order to upgrade by adding new functions to meet the various needs of consumers, a product with added functions must be purchased again. Due to changes in consumers' lifestyles or technological development, it was not possible to provide additional functions of home appliances.

In addition, in order to manage various home appliances connected to the internet, it is required to develop a technology that allows users to easily check upgradeable or upgradeable functions, request an upgrade, and check the status or result of the upgrade.

### [Disclosure]

### [Technical Problem]

An objective of the present disclosure is to provide a method for upgrading a home appliance with new software and notifying an upgrade with a variety of devices.

Another objective of the present disclosure is to provide a method in which a home appliance ready for a new upgrade notifies an upgrade by using an interface of the home appliance and an application of a user terminal in link with the home appliance.

Another objective of the present disclosure is to provide a home appliance upgrade notification in a visual or audible manner so that a user can easily check notification information when using the home appliance.

Yet another objective of the present disclosure is to provide an upgrade notification by reflecting characteristics of a home appliance so that the performance of the home appliance may be continuously improved.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solution]

A method for upgrading software of a home appliance according to an embodiment comprises downloading software to be upgraded from a management server by a home appliance, outputting a notification for installing software in a home appliance by the home appliance, and instructing installation of the software in the home appliance by an application of a user terminal in link with the home appliance.

The method for upgrading software of a home appliance according to an embodiment comprises outputting a notification for installing upgradable software in a home appliance by the home appliance, and instructing installation of the software in the home appliance by an application of a user terminal in link with the home appliance.

A home appliance software of which is upgraded according to an embodiment comprises a communication unit configured to communicate with a management server and to receive software transmitted to be upgraded, a storage configured to store the software transmitted, an user interface configured to output a notification for installing the software in the home appliance, and a controller configured to installed the software stored.

A method for notifying an upgrade of software of a home appliance according to an embodiment comprises transmitting software to a home appliance by a management server, downloading the software from the management server by the home appliance, transmitting an output instruction message for instructing an output of an installation notification of software to the home alliance by the management server, and outputting an installation notification by the home appliance.

A home appliance according to an embodiment comprises a communication unit configured to communicate with a management server and to download software to be installed in a home appliance, a controller configured to install the software, and a user interface configured to output notification information in relation to installation of the software, wherein as the communication unit receives an output instruction message for instructing an output of an installation notification of the software from the management server, the user interface outputs the installation notification under control of the controller.

A management server according to an embodiment comprises a server communication unit configured to transmit software to be installed in a home appliance to the home appliance, and a server controller configured to generate an output instruction message for instructing the home appliance to output an installation notification message of the software and to control the server communication unit to allow the server communication unit to transmit the output instruction message.

### [Advantageous Effects]

According to the present disclosure, the home appliance may notify a new upgrade by using an interface of the home appliance or an application of a user terminal in link with the home appliance.

According to the present disclosure, the home appliance may provide a visual and acoustic notification.

According to the present disclosure, the home appliance may provide an upgrade notification considering the characteristics of a product, and perform an upgrade based on the user's participation.

Effects according to the present disclosure are not limited to the above-described effects, and one having ordinary skill in the art may readily draw a variety of effects from the configuration of the subject matter of the present disclosure.

### [Description of Drawings]

FIG. 1 is a block view showing a schematic configuration of upgrading a home appliance according to an embodiment of the present disclosure.
FIG. 2 is a block view showing a schematic configuration of a home appliance according to an embodiment.
FIG. 3 is a block view showing a schematic configuration of a user terminal according an embodiment.
FIG. 4 is a block view showing a schematic configuration of a management server according to an embodiment.
FIG. 5 is a flow chart showing a method for upgrading a home appliance according to an embodiment.
FIG. 6 is a view showing a process of an upgrade operation according to an embodiment.
FIG. 7 is a view an upgrade repetition alarm process according to an embodiment.
FIG. 8 is a view showing a method for providing a new upgrade notification according to an embodiment.
FIG. 9 is a view showing a message transmission process and an operation process among a user terminal, a management server and a home appliance according to an embodiment.
FIG. 10 is a view showing a message transmission process and an operation process among a user terminal, a management server and a home appliance according to another embodiment.
FIGS. 11 and 12 are views showing an upgrade process of a home appliance according to an embodiment.
FIGS. 13 and 14 are views showing an upgrade process of a washing machine according to an embodiment.
FIG. 15 is a view showing an upgrade process of a washing machine according to another embodiment.
FIG. 16 is a view showing a method for outputting upgrade notification information according to an embodiment.
FIG. 17 is a view showing a process in which a home appliance performs an upgrade according to an embodiment.
FIG. 18 is a view showing a process in which a home appliance using an LCD as a user interface of notifying and setting an upgrade according to an embodiment.
FIG. 19 is a view showing a process of outputting information after the upgrade of a home appliance according to an embodiment.
FIG. 20 is a view showing a specific communication among a management server, a home appliance and a user terminal according to an embodiment.
FIG. 21 is a view showing an upgrade process according to another embodiment.

### [Detailed Description of Exemplary Embodiments]

The above-described aspects, features and advantages are specifically described hereunder with reference to the accompanying drawings such that one having ordinary skill in the art to which the present disclosure pertains can easily implement the technical spirit of the disclosure. The invention can be embodied in various forms and is not limited to the embodiments. In the disclosure, detailed descriptions of known technologies in relation to the disclosure are omitted if they are deemed to make the gist of the disclosure unnecessarily vague.

Hereinafter, preferred embodiments according to the disclosure are specifically described with reference to the accompanying drawings. In the drawings, identical reference numerals can denote identical or similar components. Description will now be given in detail according to exemplary embodiments disclosed herein, with reference to the accompanying drawings. For the sake of brief description with reference to the drawings, the same or equivalent components may be provided with the same reference numbers, and description thereof will not be repeated.

Terms such as first, second, A, B, (a), and (b) can be used to describe elements of the invention. These terms are merely used to distinguish one element from another element and the essence, order, sequence, number, or the like of the elements is not limited to the terms. If it is mentioned that an element is "coupled" or "connected" to another element, it should be understood that the element is directly coupled or connected to another element or still another element may "interposed" therebetween or the elements may be "coupled" or "connected" to each other with still another element interposed therebetween.

In addition, components may be subdivided for convenience of description in implementing the present disclosure, but these components may be implemented in one device or module or one component may be a plurality of devices. Alternatively, it may be implemented by being divided into modules.

First, the upgrade of the home appliance described in the present disclosure refers to the upgrade of software installed in the home appliance. The software may include firmware for operation of a controller (i.e., microcomputer) and a content program executed on the firmware. As one example, the content program may be a program for setting a background screen of a display provided in a washing machine, a program for setting a washing course of the washing machine, and the like.

In addition, the upgrade process is defined as including a download process and an upgrade process. The download process is a process in which software data for recording software is received and stored in the home appliance. The upgrade process is a process in which software data stored in the home appliance is written to the controller or microcomputer. Also, the software upgrade may be accompanied by a functional change of the hardware. In this case, the software upgrade of the home appliance may cause the functional upgrade of the hardware.

The home appliance may include a controller. The controller may be configured to execute specific software so as to implement a function desired by the user.

After the sale of home appliances manufacturers may only provide simple support such as program error correction. Accordingly, when a new home appliance with new functions is released, the user must purchase a new home appliance. That is, the user has to replace an existing home appliance with a new home appliance in order to use new functions, which causes user dissatisfaction. To solve the problem, the user may look at a method for improving or adding functions of the home appliance by upgrading the software of the home appliance.

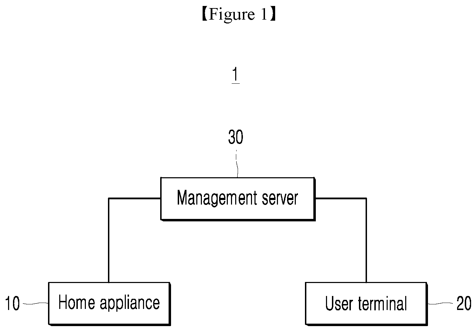

FIG. 1 is a block view showing a schematic configuration of upgrading a system 1 for upgrading a home appliance according to an embodiment of the present disclosure.

Referring to FIG. 1, the system 1 configured to upgrade a home appliance (hereinafter, referred to as "the system") may include a home appliance 10, a user terminal 20 and a management server 30.

The home appliance 10 may refer to a home appliance or electronic product that is installed in a user's residential space or office space to perform a unique function. As one example, the home appliance 10 may include a refrigerator, a TV, a washing machine, a dryer, an air conditioner, an air purifier, a medical management device, a microwave oven, an electric range, an oven and the like. The home appliance 10 may be equipped with a communication interface or communication unit for performing communication by wire or wirelessly. In addition, the home appliance 10 may provide information related to the upgrade to the user through visual or auditory information output.

The user terminal 20 may be a device possessed by the user. As one example, the user terminal 20 may be a device that exchanges information with home appliances through a server to perform an upgrade. The user terminal 20 may be a smart phone, a smart watch, notebook, a tablet PC or a home hub that is a separate product, AI (Artificial Intelligence) speaker, a refrigerator, a TV equipped with the corresponding function or the like.

The management server 30 may be a device configured to remotely manage the home appliance 10. The management server 30 may be communicatively connected to the home appliance through a communication network, and configured to manage the home appliance 10 by interworking with the user terminal 20.

The management server 30 may store information to be provided to the home appliance 10 or the user terminal 20, software required for upgrade, and the like. In addition, software or information required for upgrade may be transmitted to the home appliance 10 or the user terminal 20 in a push manner in advance based on a preset download method or a storage mechanism.

In particular, the management server 30 may store information for upgrading the home appliance 10. The information stored in the management server 30 may include data related to the software installed in the home appliance 10, information related to the home appliance 10 and information related to the user. The software data may include data about firmware of the home appliance (i.e., firmware data) and data about a content program executed on the firmware (i.e., content program data).

The users may communicate with the management server 30 or the home appliances 10, using the user terminal 20. The user may control the functions or upgrade methods of plural home appliances 10, using the user terminal 20. The user terminal 20 and the home appliances 10 may communicate with each other via the management server 30. Alternatively, the user terminal 20 and the home appliances 10 may directly communicate with each other, using short distance communication.

Next, will be described a visual and auditory interface configured to notify the user that a new function has been added while the home appliance is connected to the network. The home appliance may provide the visual and auditory interface to notify users that a new function has been added and to allow the users to recognize it, after a new upgrade function is registered in the management server. A display (e.g., LCD, LED or the like) provided in the home appliance may be configured to output visual information. A speaker, a vibrating element, a buzzer, etc that are provided in the home appliance may be configured to output auditory information (e.g., sound effects).

The user may check the visual and auditory information and recognize that the new function has been added.

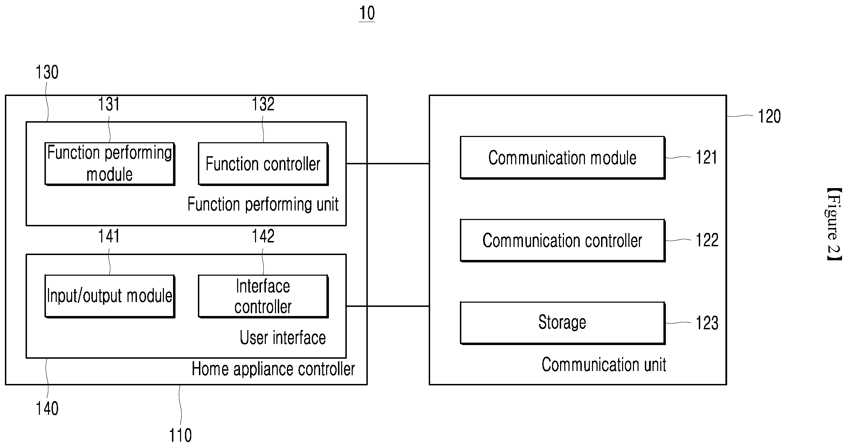

Hereinafter, referring to FIGS. 2 to 4, the configuration of the home appliance 10, the user terminal 20 and the management server 30 will be described in detail.

FIG. 2 is a block view showing a schematic configuration of the home appliance 10 according to an embodiment. The home appliance may include all kinds of the electronic products and the like.

Referring to FIG. 2, the home appliance 10 may include a communication unit 120, a home appliance controller 110, and a user interface 140. The configuration of the home appliance 10 may not be limited to what is shown in FIG. 2 and the home appliance 10 may further include various additional components. For convenience of description, a component including the function performing unit 130 and the user interface 140 may be collectively referred to as a home appliance controller or a controller.

The communication unit 120, the function performing unit 130 and the user interface 140 may tranceive data with each other through a local bus.

The function performing unit 130 may be configured to control the overall operation for performing the functions of the home appliance 10. The function performing unit 130 may correspond to a microcomputer and operate based on the firmware.

Though not illustrated in the drawings, the function performing unit 130 may include a processor and an internal memory. Alternatively, the function performing unit 130 may be configured in plurality according to the functions of the home appliance.

The processor may include one or more of a central processing unit (CPU), an application processor or a communication processor. The processor may execute one or more commands related to the control of the home appliance by operating based on the firmware.

The internal memory may be a volatile and/or non-volatile memory. The internal memory may store the firmware and one or more commands related to the control of the home appliance 10.

The communication unit 120 may configured to perform communication with the management server 30.

Specifically, the communication unit 120 may receive firmware data and software data (e.g., content program data) from the management server 30. The communication unit 120 may store the received software data and transmit the stored software data to at least one of the function performing unit 130 or the user interface 140.

The communication unit 120 may include a communication module 121, a communication controller 122 and a storage 123.

The communication module 121 may be configured to transceive data. The communication module 121 may transmit and receive data via wire or wirelessly.

According to an embodiment, the communication module 121 may be a short range wireless communication module configured to implement short range wireless communication. The short range communication module may be wireless communication based on WiFi (Wireless Fidelity), Bluetooth, RFID (Radio Frequency Identification), Infrared Data Association, UWB (Ultra-wideband), ZigBee or the like.

When the communication module 121 is a short range wireless communication module, an access point (not shown) may be provided in the user's residential space. The access point may be a device configured to relay wireless communication between the management server 30 and the communication module 121. As one example, when the communication module 121 is a WiFi module, the access point may be a WiFi router.

According to another embodiment, the communication module 121 may be a long distance wireless communication module configured to implement long distance wireless communication. The long distance wireless communication module may be a wireless communication module based on CDMA(code division multiple access), FDMA(frequency division multiple access), TDMA(time division multiple access), OFDMA(orthogonal frequency division multiple access), SCFDMA(single carrier frequency division multiple access), 5G or the like.

The communication controller 122 may control the communication module 121 and the storage 123. The communication controller 122 may correspond to a microcomputer for controlling communication. The communication controller 122 may operate based on firmware.

The communication controller 122 may store the data received from the communication module 121, particularly software data, in the storage 123. In addition, the communication controller 122 may transmit the software data stored in the storage 123 to the function performing unit 130 and the user interface 140 through a local bus. In this embodiment, a memory for download may be provided in the communication unit 120, but it may be provided in the controller 110 or a predetermined area allocated in the memory of the controller 110. The downloaded software may be transmitted to the memory of the home appliance controller 110 through serial communication, and recoded to upgrade or add the existing control program to upgrade the home appliance. When the home appliance controller 110's memory is formed by allocating the download area, the download area may be allocated and rebooted. After that, the rebooted download area may be allocated to the control area, to upgrade the home appliance with new software.

Though not illustrated in the drawings, the communication controller 122 may include the processor and the internal memory. The processor and the internal memory are described above.

The storage 123 may be a volatile and/or non-volatile memory. The internal memory may store the software received from the communication module 121.

The function performing unit 130 may be a component configured to perform a unique function provided by the home appliance 10. As one example, the unique function may be a washing function of a washing machine, a drying function of a dryer, an air conditioning function of an air conditioner, an air purifying function of the air purifier, or the like.

The function performing unit 130 may include a function performing module 131 and a function performing controller 132.

The function performing module 131 may be a module configured to perform the above-described function, and may include a drive part having a motor, a heating part and a cooling part.

The function performing controller 132 may be configured to control the function performing module 131. The function performing controller may correspond to a microcomputer configured to control the function performing. The function performing controller 132 may operate based on firmware.

Though not illustrated in the drawings, the function performing controller 132 may include a processor and an internal memory. The processor and the internal memory are described above.

The user interface 140 may be configured to provide operation information of the home appliance 10 and information related to the upgrade of the home appliance 10 to the user. As one example, the user interface 140 may include a display module and a speaker module. Additionally, the user interface 140 may receive the user's input for controlling the operation of the home appliance 10.

The user interface 140 may include an input-output module 141 and an interface controller 142.

The input-output module 141 may be configured to visually and/or audibly output operation information of the home appliance 10 and upgrade-related information of the home appliance 10 to the user, and may receive input information. When the input-output module 141 is a display module, the user interface 140 may be a display panel. In addition, the user interface 140 may include a speaker, a buzzer, an LED segment, and the like.

The interface controller 142 may be configured to control the input-output module 141. The interface controller 142 may correspond to a microcomputer configured to control the interface. The interface controller 142 may operate based on firmware.

Though not illustrated in the drawings, the interface controller 142 may include a processor and an internal memory. The processor and the internal memory are described above.

Further, the firmware of the communication controller 122, the firmware of the function performing controller 132 and the firmware of the interface controller 142 may be different from each other.

An embodiment of the home appliance performing a software upgrade notification is as follows.

The communication unit 120 may be configured to perform communication with the management server 30 and download the software to be installed in the home appliance. The downloaded software may be installed in the home appliance controller 110 of the product and the home appliance controller 110 may install the software.

The user interface 140 outputs notification information in relation to the functions and operations of a product, and the upgrade installation of software. In the case where the communication unit 120 receives an output instruction message for an instruction to output an installation notification of software from the management server 230, the user interface 140 may output the installation notification.

Further, after the user interface 140 outputs notification information on installation of software, the communication unit 120 may receive an installation instruction message for an instruction to install software from the management server 30. The home appliance may perform installation of software based on the instruction message. In the case where a plurality of software is downloaded, and installation of a portion of the plurality of software downloaded is instructed, a portion of the plurality of software only may be set to be installed or installable.

The user interface 140 may include an output interface including one or more of an LED segment, an LCD display, a buzzer, and a speaker that are attached to the home appliance to perform a visual or audible notification. In addition, the user interface 140 may include an input interface including one or more of a button, a touch screen, a dial, a slide bar interface, and a slide UI.

The installation instruction message may start from the user terminal 20. For example, when the user terminal 20 interconnected with the home appliance instructs to install software, the communication unit 120 may receive an installation instruction message from the management server 30 in order.

In addition, the user interface 140 may output a software installation status under the control of the controller so that the user can check the software installation process. The user interface 140 may display a guide phrase such as "installing" or "upgrading" or output a voice guide or sound effect.

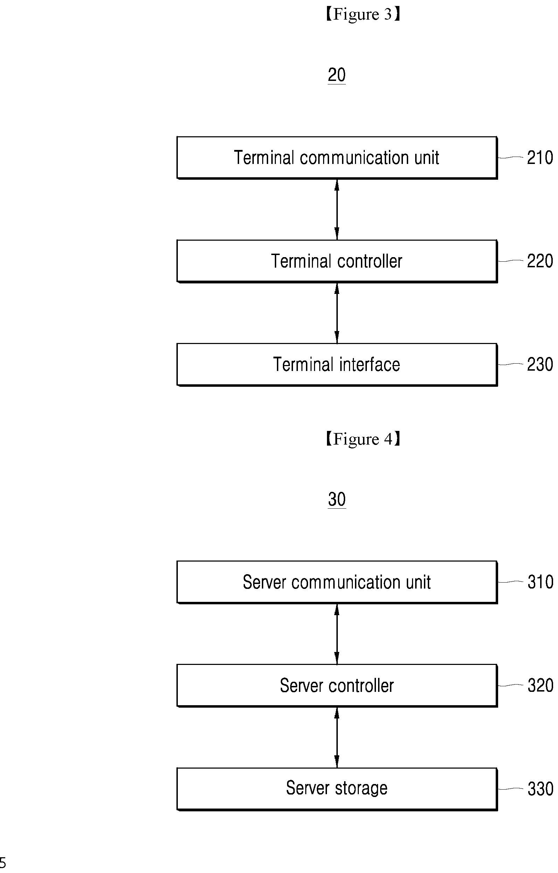

FIG. 3 is a block view showing a schematic configuration of a user terminal 20 according an embodiment. The user terminal 20 may be referred to as a smartphone or a client device or the like.

Referring to FIG. 3, the user terminal 20 may include a terminal communication unit 210, a terminal controller 220 and a terminal interface 230.

The terminal communication unit 210 may be configured to perform communication with the management server 30. The terminal communication unit 210 may perform communication with a wire and/or wirelessly. The wireless communication may include a short range wireless communication and a long distance wireless communication.

The terminal controller 220 may be configured to control the terminal communication unit 210 and the terminal interface 230.

Though not illustrated in the drawings, the terminal controller 220 may include a processor and an internal memory. An application for a terminal may be stored in the internal memory to manage the home appliance 10. The process may be configured to execute the application for the terminal.

The terminal interface 230 may be configured to output an execution screen of the application for the terminal. Particularly, the terminal interface 230 may visually and/or audibly output information related to the upgrade of the home appliance 10.

FIG. 4 is a block view showing a schematic configuration of a management server 30 according to an embodiment. The management server may be referred to as the server for short.

Referring to FIG. 4, the management server 30 may include a server communication unit 310, a server controller 320 and a server storage 333.

The server communication unit 310 may be configured to perform communication with the home appliance 10 and the user terminal 20. The server communication unit 310 may perform communication via a wire and/or wirelessly. The wireless communication may include a short range wireless communication and a long distance wireless communication.

The server controller 320 may be configured to control a server communication unit 310 and a server storage 330.

Though not illustrated in the drawings, the server controller 320 may include a processor and an internal memory. The internal memory may be configured to store an application for a server to manage the home appliance 10. The processor may be configured to execute the application for the server.

The server storage 330 may be a volatile and/or non-volatile memory, and it may store information related to the upgrade of the home appliance 10. The upgrade-related information may include data related to the software installed in the home appliance 10, information related to the home appliance 10, information related to the user and the like. The software data may include firmware data and content program data of the home appliance.

Further, each of the firmware data and the content program data may be stored in the server storage 330 for each version. Particularly, for software upgrade, firmware data of the latest version and content program data may be stored in the server storage 330, respectively.

As described above, the home appliance 10 may include the plurality of controllers (i.e., microcomputers) 110, 122, 132 and 142. Firmware of the plurality of controllers may be different from each other. The server storage 330 may be configured to store firmware data for each of the plurality of controllers 110, 122, 132 and 142.

The management server 30 may be configured to transmit software, to be installed in the home appliance, to the home appliance 10 and transceive a message with the home appliance 10 and the user terminal 20.

The server controller 330 may be configured to generate an output instruction message for instructing output of a software installation notification message. Also, the server controller 330 may be configured to control the server communication unit 310 to transmit an output instruction message.

The home appliance 10, the user terminal 20 and the management server 30 that are described above may implement embodiments of the upgrade notification which will be described later.

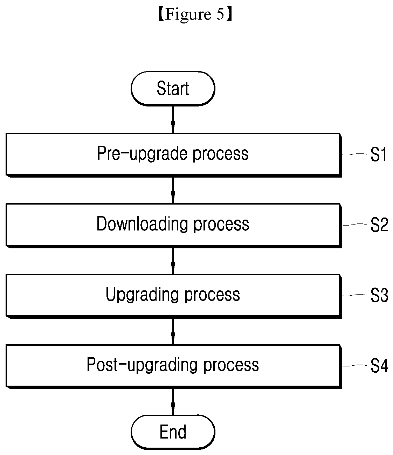

Hereinafter, referring to FIG. 5, a process of upgrading software that is performed in a system 1 will be described.

FIG. 5 is a flow chart showing a method for upgrading a home appliance 10 according to an embodiment.

The upgrade method may be performed for each of a plurality of home appliances 10 possessed by the user. For convenience of description, a software upgrade method for one home appliance 10 is described in FIG. 5.

The software upgrade method may be performed by the co-working of the home appliance 10, the user terminal 20 and the management server 30.

Hereinafter, a process of performing each operation will be described.

In S 1, a preliminary process of the upgrade may be performed.

In S1, the home appliance 10 and the management server 30 may be connected by communication, and upgrade-related information may be stored in the server storage 330, and also, an upgrade schedule including an upgrade cycle, an upgrade reservation and the like may be set. And the upgrade schedule may include notification schedule for notifying upgrade related information to user after upgrade.

In S2 and S3, the upgrade process may be performed.

First, a download process of the upgrade process may be performed in S2.

Specifically, the management server 30 may transmit software data to the home appliance 10. The software data transmitted by the management server 30 may be transmitted to and stored in the communication unit 120 of the home appliance 10. As described above, the transmitted software data may be firmware data or content program data.

The software data may include two or more firmware data, and the management server 30 may sequentially transmit the two or more firmware data to the home appliance. That is, when two or more of the plurality of controllers 110, 122, 132 and 142 provided in the home appliance 10 are upgraded, the management server 30 may sequentially transmit two or more firmware data corresponding to the two or more controllers to the home appliance 10. The transmission order of the two or more firmware data may be preset. As one example, when the function controller 132 and the interface controller 142 are upgraded, firmware data for the function controller 132 may be transmitted first, and then firmware data for the interface controller 142 may be transmitted.

Alternatively, the software data may include two or more content program data. The management server 30 may sequentially transmit two or more content program data to the home appliance 10. Each of the two or more content program data may be data for a content program performed in at least one of the plurality of controllers 110, 122, 132 and 142 provided in the home appliance 10. The transmission order of the two or more content program data may be preset.

Alternatively, the software data may include at least one firmware data and at least one content program data. In this instance, the management server 30 may sequentially transmit the at least one firmware data and the at least one content program data.

Next, in S3, the upgrade process may be performed.

Specifically, the communication unit 120 may write the stored software data in the corresponding one of the plurality of controllers 110, 122, 132 and 142. The software may be installed in the controller by being written in the controller.

When the plurality of software data stored in the communication unit 120 include two or more firmware data, the communication unit may write two or more firmware data in the corresponding controllers, respectively. The writing order of the two or more firmware data may be preset. As one example, when the function controller 132 and the interface controller 142 are upgraded, firmware data for the function controller 132 may be first written and then firmware data for the interface controller 142 may be written.

Alternatively, when the plurality of software data stored in the communication unit 120 include two or more content program data, the communication unit may write two or more content program data in corresponding controllers, respectively. The writing order of the two or more content program data may be preset.

Alternatively. When the plurality of software data stored in the communication unit 120 include at least one firmware data and at least one content program data, the communication unit 120 may write at least one firmware data and at least one content program data in corresponding ones of the controllers 110, 122, 132 and 142, respectively. The writing order of the at least one firmware data and the at least one content program data may be preset. As one example, when the plurality of software data include firmware data and content program data for the user interface 140, firmware data may be written first and then the content program data may be recorded.

In S4, a post-upgrade process may be performed.

As one example, in S4, specific functions of the upgraded software may be set. Particularly, when the plurality of software are upgraded, specific functions for each of the plurality of software may be sequentially set.

Hereinafter, the upgrade and its notification will be mainly described. The upgrade described in the present disclosure may include replacement, modification, deletion, addition or the like of all or part of a software module or data required by the software module. Alternatively, the upgrade may be controlled in various communication methods such as wired or wireless communication. In addition, the upgrade may be performed in a form in which a storage medium having the stored software required for the upgrade may be combined with the home appliance.

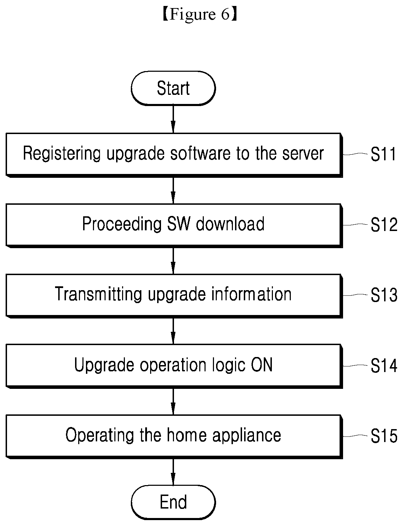

FIG. 6 shows a process of an upgrade operation according to an embodiment. When the upgrade contents to be applied to the home appliance are newly registered in the management server, a new program may be automatically downloaded according to the flowchart of FIG. 6 and then the upgrade notification may be performed.

Software such as programs and data required for the upgrade may be registered in the management server 30 (S11). A version different from the previously deployed upgrade version (e.g., package version) may be changed. When a new program is registered, the existing program installed in the home appliance may be replaced with the new program.

After that, the home appliance 10 such as a refrigerator, TV or washing machine may download software registered for upgrade from the management server 30.

After downloading the software to be installed in the home appliance (S12), the communication unit 120 of the home appliance 10 may transmit it to the home appliance (S13). In S12 or S13, the user may perform a predetermined checking procedure by using the user interface 140 of the home appliance 10 or the user terminal 20.

Hence, the home appliance 10 may turn on (On or activate) an upgrade operation logic (S14). Then, the home appliance 10 performs an action (S15) to visually/audibly indicate that it is in an upgradeable state, i.e., in an upgrade notification state.

This is one embodiment of a notification at a certain time. As one example, the home appliance 10 may notify an upgrade preparation status once between 6:00 and 10:00 in the morning. The home appliance 10 may notify the upgrade preparation status one between 11:00 and 15:00 during lunch time. In addition, the home appliance 10 may notify the upgrade preparation status once between 17:00 and 21:00 in the evening. The notification may also be provided to the user terminal 20.

Between S12 and S13 may be performed a process of proceeding with the upgrade after the user may confirm that the upgrade may be ready. The process may provide notification information indicating that the upgrade is ready, that is, indicating that the software installation is ready. The notification information may be output by the user interface 140 of the home appliance 10 or a screen, speaker and the like of the user terminal 20 interconnected with the home appliance 10. In this process, the user may select only some of the functions if there are many functions to be upgraded.

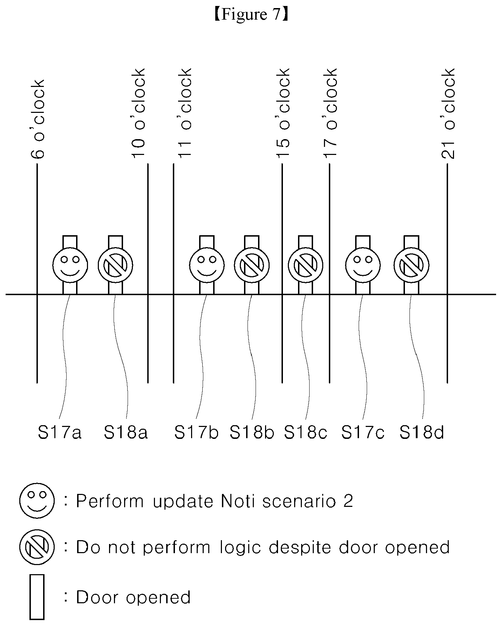

FIG. 7 is a view an upgrade repetition alarm process according to an embodiment.

An upgrade notification is performed three times in each time slot, depending on the operation scenario in FIG. 4, based on the characteristics of the home appliance 10, and an identical operation is repeated for two days. In the case where the user does not proceed with the upgrade, the home appliance 10 determines that the user's intention is not to proceed the upgrade of the home appliance and does not proceed with an upgrade notification any more.

In FIG. 7, S17a, S17b and S17c denote a time point when information (notification) indicating an upgrade is completed is output from the user interface 140 of the home appliance 10. In the case where the home appliance 10 is a refrigerator, the user interface 140 of the home appliance 10 performs a notification, as the user using the refrigerator performs a user operation (opening or closing the door).

Further, since notification frequencies or notification intervals are scheduled in advance, the controller may control the user interface 140 to allow the user interface to repeat outputting a notification (installation notification) based on a notification schedule.

For example, in the case where a notification interval in the notification schedule is a certain time slot (morning/afternoon/ evening), the home appliance 10 performs a notification only once in a corresponding time slot, and does not output additional notification information as illustrated in S18a, S18b, S18c and S18d despite any other user operation (user operation of opening the door) at the corresponding time slot.

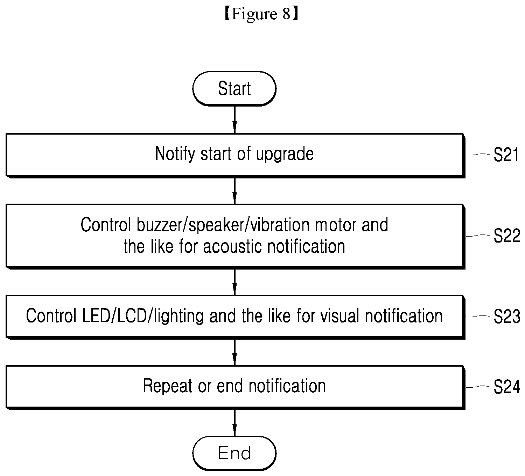

FIG. 8 is a view showing a method for providing a new upgrade notification according to an embodiment.

The home appliance 10 may inform the user that a new function is added visually or acoustically, to provide a new upgrade notification. Further, an upgrade notification method may be performed based only on a visual one or an acoustic one or based on a combination of a visual one and an acoustic one. The user may check a new function related upgrade, based on a visual output/an acoustic output.

The home appliance 10 starts an upgrade notification (S21).

The home appliance 10 may control a buzzer/speaker/vibration motor and the like, for an acoustic notification (S22). The home appliance 10 may control a buzzer to allow the buzzer to output a specific sound. The home appliance 10 may control highness and lowness of a sound output by the buzzer to perform an upgrade notification. Additionally, the home appliance 10 may control a speaker to allow the speaker to output certain music or a guide message. The home appliance 10 may control the speaker to output a voice message in relation to description of an upgrade.

Additionally, the home appliance 10 may control a vibration motor to allow the user to check the situation of an upgrade notification, based on vibrations.

Further, the home appliance 10 may control may control a LED/ LCD/lighting and the like, for a visual notification (S23). The home appliance 10 may control a LED (LED display unit) displaying an alphabet, a number and the like, to perform an upgrade notification. At this time, the home appliance 10 may control the LED to allow the LED to display a short form (UP, LL and the like) of a word indicating an upgrade notification.

Further, the home appliance 10 may control a LCD display to allow the LCD display to output a predetermined text message or a predetermined image or a predetermined video and the like, to perform an upgrade notification. For example, the LCD display may output wording like "A new upgrade is ready. Check it, please."

The home appliance 10 repeats or ends an upgrade notification based on a notification schedule (S21). A method for checking the upgrade of the home appliance 10 may be performed only by the home appliance 10. Alternatively, the method for checking the upgrade of the home appliance 10 may also be performed through the user terminal 20 in link with the home appliance 10.

The upgrade notification described above may be applied both of case i) where new software is uploaded on the server 30 and case ii) where new software is downloaded on the home appliance 10 from the server 30. When the user chooses to install specific software on the user terminal 20 or the home appliance 10, in the case of i), the notification may end. When the user cancels an upgrade rather than selecting an upgrade, on the user terminal 20 or the home appliance 10 in the case of ii), the notification may end.

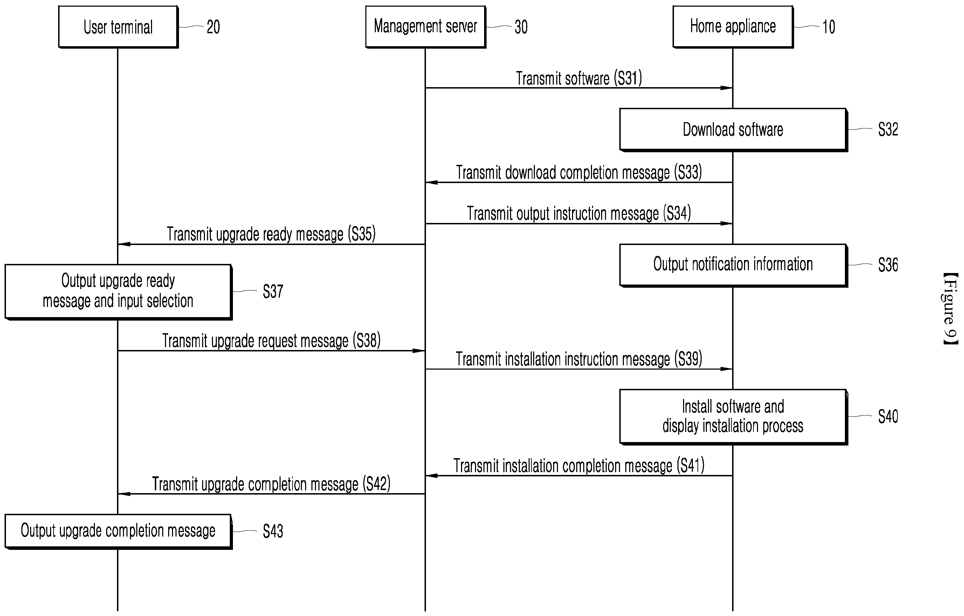

FIG. 9 shows a message transmission process and an operation process among a user terminal, a management server and a home appliance according to an embodiment.

When software for performing a predetermined upgrade is uploaded to the management server 30, the management server 30 may transmit the software to the home appliance 10 to install it (S31). That may be done in a time period in which the home appliance 10 does not perform some functions or a time period that is agreed in advance. After downloading the software to install, the home appliance 10 may transmit a download complete message to the management server 30 (S33).

The management server 30 may transmit a display instruction message for instructing an output of an installation notification of software to the home appliance 10 completing the download (S34).

When the management server 30 transmits the output instruction message, it may be immediately after receiving the download complete message or after a predetermined period of time has elapsed according to the user's active time using the corresponding home appliance 10.

Alternatively, the management server 30 may include a condition for outputting the output instruction message in the output instruction message. The output instruction message may be provided with various conditions, such as a time condition for outputting an installation notification, a condition for indicating when the user is near the home appliance 10, or a condition for instructing output when the home appliance 10 is in use.

The above-described notification schedule may be also provided in the output instruction message.

After that, the home appliance 10 may receive the output instruction message and output notification information (S36). The output method may include outputting information to the user interface 140 in visual and/or audible manner.

In case of text output, the home appliance 10 may notify the user that the upgrade is ready and that the user can check the contents of the upgrade through the user terminal 20.

While transmitting the output instruction message (S34), the management server 30 may transmit the software upgrade preparation message to the user terminal 20 in link with the home appliance 10 (S35). The upgrade preparation message may include a functional description of the software to be installed, or a description of a functional change of the home appliance due to the software installation. The management server 30 may transmit the upgrade preparation message to the user terminal 20 as a push message.

Step 35 and step 36 may be performed at the same time. After performing S36, S35 may be performed or after performing S35, S36 may be performed.

Unless the user selects a separate upgrade in S37 after the notification information is output as shown in S36, S34 and S36 may be repeated. The notification may be repeated based on the notification schedule as described above.

If the user selects the upgrade, notification repetition may be turned off. Even if the user selects to cancel the upgrade, notification repetition may be turned off. If the user does not select the upgrade and does not cancel the upgrade while viewing only a pop-up message, the home appliance 10 may perform notification repetition according to the notification schedule.

More specifically, the home appliance 10 may control the user interface 140 based on the notification schedule, and the user interface 140 may repeatedly output an installation notification based on the notification schedule.

Certainly, the home appliance 10 may stop the notification when the software installation is in progress or the notification is output more than a certain number of times, or when the user selects not to install the software. Also, when new software is downloaded, the home appliance 10 may start to transmit a notification again.

The user terminal 20 may include a mobile phone, a smart phone, a notebook, a tablet and the like. The user may select whether to upgrade with respect to the preparation message output as a pop-up or the like on the user terminal 20. The type of selection may be divided into the option to request the upgrade and the option to cancel the upgrade.

When the user terminal 20 transmits the upgrade request message to the management server 30, the management server 30 may transmit the installation instruction message for instructing installation of software to the home appliance 10 (S39).

Once receiving the installation instruction message, the home appliance may install the software and selectively display the installation process. For example, the LCD of the user interface 140 provided in the home appliance 10 may display the phrase "upgrading software" or the LED may display the upgrade status with numbers such as 00 to 99.

Once the software installation is complete, the home appliance 10 may transmit the installation complete message to the management server 30. After receiving it, the management server 30 may transmit the upgrade complete message to the user terminal 20 (S42). The user terminal 20 may output the upgrade completion and the user may check the completed upgrade function.

In the above description, when new software for performing a predetermined upgrade is uploaded to the management server 30, the corresponding software may be downloaded from the management server 30 to the home appliance (S31 and S32). When the upgrade process is executed through the user terminal 20 and the corresponding software is not upgraded after installed in the controller of the home appliance 10, the home appliance may provide a corresponding upgrade installation alarm as an embodiment. In addition, if the upgrade has not proceeded after the new software is uploaded to the management server 30, the home appliance 10 as a product may guide this. When the software to be upgraded is selected and executed, the software may be selectively downloaded from the management server and written in the home appliance controller to perform the upgrade.

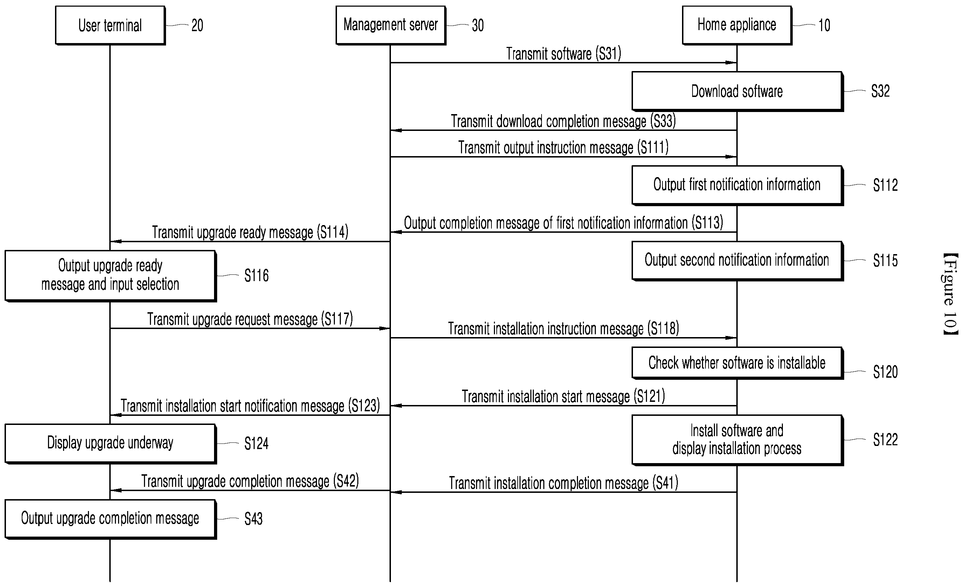

FIG. 10 shows a message transmission process and an operation process among a user terminal, a management server and a home appliance according to another embodiment. The same process as in FIG. 9 is included as it is. For description of the processes of S31 to S33 and S41 to S43 may refer to FIG. 9.

After the home appliance 10 transmits (at S33) the download complete message to the management server 30, the management server 30 may transmit the output instruction message to the home appliance 10 (5111). At this time, the output instruction message may include information about whether the home appliance 10 previously outputs a notification for the upgrade of the software.

If it is the first case that the notification has not been output before, the home appliance 10 may output first notification information (S112). After outputting the first notification information, the home appliance 10 may transmit a first notification information output complete message to the management server 30 (S113).

As one example, after the home appliance 10 outputs the first notification information, when the user touches a "confirm" area displayed on the LCD screen of the home appliance 10, or, when it is confirmed that the user is near the home appliance 10 at the time the first notification information is output, the home appliance 10 may transmit a first notification information output complete message to the management server 30. After outputting the first notification information, the home appliance 10 may output second notification information (S115).

The first notification information may include a text indicating that the upgrade is ready. The second notification information may include a text instructing the user to check the detailed information of the upgrade through the user terminal 20.

Alternatively, the first notification information and the second notification information may include the same phrase.

Hence, the management server 30 may receive the first notification information output complete message and then transmit an upgrade preparation message to the user terminal 20 (S114). As described in S34 of FIG. 9, the push message may be one example. Thereafter, S116 to S118 may be the same as S37 to S39, thereby omitting detailed description thereof. When the home appliance 10 having received the installation instruction message is currently in an installation-ready state where the software may be installed, the home appliance 10 may transmit an installation start message to the management server 30 (S121).

If the home appliance 10 cannot install the software because it is performing another function, the home appliance 10 may wait until the corresponding function is terminated and perform S121 after that. In this instance, even when a long time elapses, the home appliance 10 may not repeat the notification.

In the state in that the installation is ready, the home appliance 10 may perform the software installation and display an installation process (S122), which is the same as S40 of FIG. 9 described above.

When receiving the installation start message, the management server 30 may transmit an installation start notification message to the user terminal 20 (S123). The user terminal 20 may display that the upgrade is in progress based on the result of the notification (S134). A subsequent process may be the same as S41 to S43 of FIG. 9.

In case of applying the embodiment of FIGS. 9 and 10, the home appliance 10 may upgrade the function of the product while being connected to a network such as Wi-Fi. After software for providing a new function is registered in the management server 30, the electric device 20 may download the software and visually and audibly notify the user that the new function has been added.

The user interface 140 of the home appliance 10 may visually and audibly output the notification for the downloadable software to notify the user. Also, a notification for adding a new function may be provided through an application of the user terminal 20.

After checked that the new function has been added, the user may select to use the new function.

In FIG. 9, if the user confirms S37 and does not select an upgrade, or if the user does not respond to the notification information output in S36, S34 and S36 may be repeated after a predetermined period of time has elapsed.

For example, the management server 30 may transmit the output instruction message (S34) and output the notification information (S36). Even when checking the push message described in S37 and recognizing that the upgrade is ready after that, the user may not select to upgrade separately.

Alternatively, in FIG. 10, when the confirmation area displayed on the screen is not touched after the home appliance 10 outputs the first notification information (S112), the first notification information output complete message (S113) may not be transmitted. In FIG. 10 as well as in FIG. 9, although recognizing that the upgrade is ready in S116, the user does not separately select the upgrade.

This may be confirmed by the management server 30, and thereafter may transmit an output instruction message to the home appliance 10 for a predetermined number of times at a predetermined interval (S34 and S111). When the user does not recognize a home appliance that is ready to upgrade after software is downloaded or the user does not select to upgrade, the home appliance 10 may repeatedly perform notification based on a preset notification schedule for the user to select upgrade.

Also, the home appliance may repeatedly output notification information based on the notification schedule for a predetermined period after the software download is completed (S32) (S36, S112 and S115). The home appliance 10 may output the notification until the upgrade is completed. Or, according to the notification schedule, the home appliance 10 may output the notification until the notification output ends.

Further, when the user selects a cancel input separately displayed on the user interface 140 of the home appliance 10, the home appliance 10 may end the repetition of the notifications.

Alternatively, even when the home appliance 10 fails to receive the output instruction message from the management server 30 due to the user's cancelation of the upgrade, the home appliance 10 may end the repetition of the notifications.

Hereinafter will be described a detailed example of effectively notifying the user that the new upgrade function is registered and completing the upgrade when a new upgradeable function for the home appliance connected to a network.

The notification of the new upgradeable function may perform a notification function through at least one or more visual or audible notification devices.

Since the download function may be activated or deactivated based on the state of the home appliance 10, the management server 30 may transmit a download instruction message for instructing a download the software to the home appliance 10 before transmitting the software (S31). In this instance, when the communication unit 120 receives the download instruction message, the home appliance 10 may not download the software immediately but download the software from the management server 30 at a downloadable time point.

In the download process, the user interface 140 of the home appliance 10 may output a software download state based on control.

In FIGS. 9 and 10, the message transceiving of the home appliance 10 may be performed by the communication unit 120. Similarly, the message transceiving of the management server 30 may be performed by the server communication unit 310. The message transceiving of the user terminal 20 may be performed by the terminal communication unit 210.

When applying the above-described example, a new upgradeable function may be registered in the home appliance connected to the network and then it may be possible to effectively notify the user that the new upgrade function is registered according to various visual or audible notification structures of the corresponding home appliance. In addition, the management server 30 and the home appliance 10 may transceive information about the notification progress and determine the number of upgrade notifications based on the user's intention and characteristics of the product to develop an upgrade scenario.

The upgrade completion may be displayed based on the visual notification structure and the audible notification structure of the home appliance, that is, by using the visual and auditory component of the home appliance. The upgrade may be completed through the user terminal in link with the home appliance (e.g., an application of a smart phone).

In the case where the embodiments of FIGS. 9 and 10 are applied, an upgrade of the software of the home appliance 10 is possible. An upgrade method comprises downloading software to be upgraded from the management server 30 by the home appliance 10 (S31), outputting a notification for installing software in the home appliance 10 by the home appliance 10 (S36, S112, S115), and instructing installation of software in the home appliance 10 by an application of the user terminal 20 in link with the home appliance 10 (S38, S39, S117, S118).

In the embodiment of FIG. 9 and 10, when new software for a predetermined upgrade is uploaded to the management server 30, corresponding software may be completely downloaded to the home appliance 10 from the management server 30 (S31 and S32). Hence, the upgrade process may be executed through the user terminal 20 and the corresponding software may be installed in the controller of the home appliance. If the upgrade is not performed, the home appliance may provide a corresponding upgrade installation notification as one example. In addition, if the upgrade is not performed after new software is uploaded to the management server, the product may guide it and software to be upgraded may be selected to instruct upgrade execution. Hence, the corresponding software may be selectively downloaded from the management server and written in the home appliance controller 110 to upgrade.

In an example in which only the selected software is downloaded after upgradeable software is selected, a notification for installation may be transmitted before S31. In this instance, the notification shown in FIGS. 9 and 10 (S36 and S111) may be displayed on the home appliance 10 in a process in that the home appliance 10 checks the uploaded new software and select the lists of software.

According to another embodiment of the present disclosure, S37 and S116 in which the user terminal 20 outputs the upgrade preparation message to input the user's selection as shown in FIGS. 9 and 10 may proceed before the download of software.

In this instance, S37 and S116 of outputting the upgrade preparation message, selecting upgradeable software and requesting to install the selected software after uploading new software to the management server may proceed. After that, the soft download and upgrade process may proceed.

Further, the above embodiments may be embodied based on detailed operations of the configuration of the home appliance 10 in FIG. 2. The communication unit 120 of the home appliance 10 receives software to be upgraded by communicating with the management server 30. The storage 123, for example, a memory and the like, stores the software transmitted. The user interface 140 outputs a notification for installing software in the home appliance. Then software to be upgraded is installed in the function controller 132 or the interface controller 142 of the home appliance.

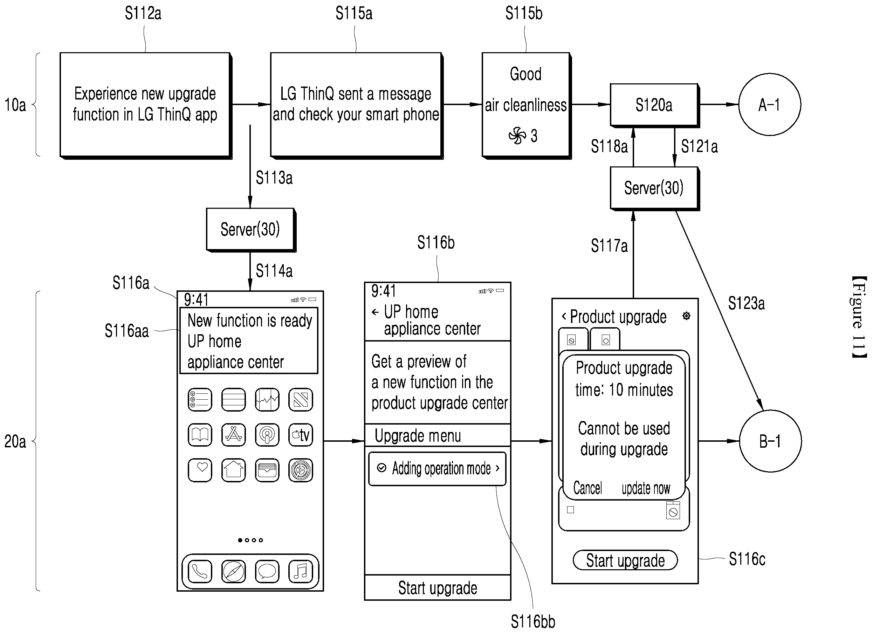

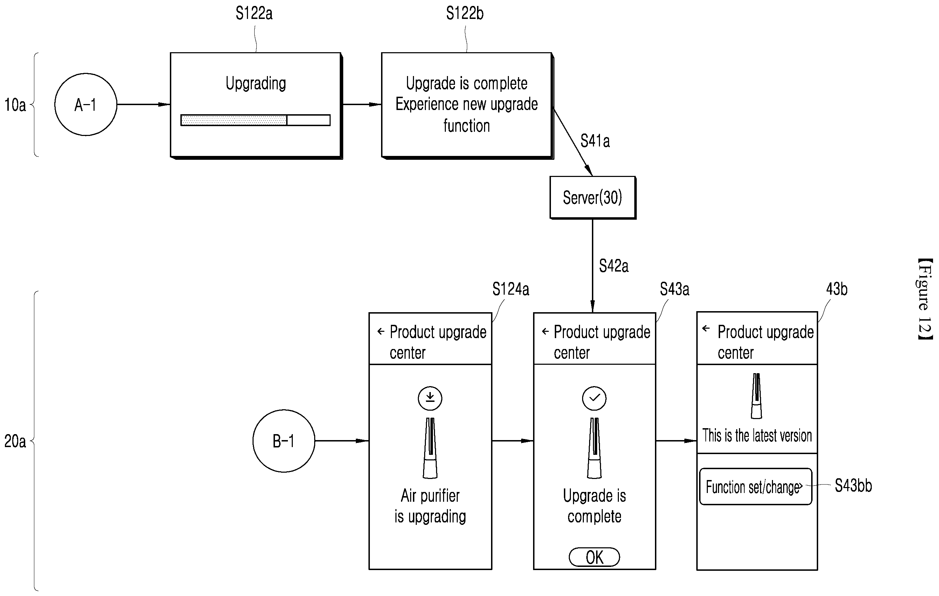

FIGS. 11 and 12 show an upgrade process of a home appliance according to an embodiment. In a detailed embodiment of FIGS. 9 and 10, a series of alphabetic characters such as a, b and c may be written and displayed for numeral references of each process. Once upgrade preparation is ready, the home appliance and an application of a smart phone 20a as an example of the user terminal may display a notification and show a process of performing the upgrade based on the control of the smart phone.

FIGS. 11 and 12 show an air purifier 10a as one example, but the present disclosure may not be limited thereto. The example of FIGS. 11 and 12 may be applied to an example in which the user interface 140 of the home appliance may display notification information while the home appliance is configured not to receive a separate input or selection. Alternatively, the example may be applied to an example in which the home appliance may receive a separate input but automatically output the next text when there is no constant input.

Next, the embodiment will be described, referring to FIG. 11.

In S31 and S32 of FIGS. 9 and 10, once the software download is completed, the air purifier 10a as the home appliance may output notification information indicating that the upgrade is available on the user interface 140 of the air purifier 10a as shown in S112a and S115a. After outputting first notification information (S112a), the air purifier 10a may transmit a first notification information output complete message to the management server 30 (S113a). After a predetermined time has elapsed, the air purifier 10a may output secondary notification information (S115a). The management server 30 may transmit the upgrade preparation message to the smart phone 20a.

At this time, the air purifier 10a may output notification information when booting by the user or in a specific condition. One example of the user interface 140 provided in the air purifier 10a may be a LCD display configured to display an air state or an operating state of the air purifier.

Before outputting the first notification information, the air purifier 10a may transmit the download complete message to the management server 30. According to another embodiment, the air purifier 10a may transmit the download complete message to the management server 30 after outputting the first and second notification information.

Once receiving the download complete message or the first notification information output complete message, the management server 30 may transmit a push message to the smart phone 20a interlocked with the air purifier 10a (S114a). The smart phone 20a may output a push message S116aa indicating that the upgrade is ready (S116a).

When the user selects the push message, description about the function to be upgraded may be displayed as shown in 116b. As instructed by S 116bb, the upgrade name of "add operating mode" and description of related functions may be displayed as "provide direct addition". Also, the smart phone 20a may display the time required for the upgrade and the phrase that the product cannot be used during the upgrade.

When the user selects to perform the upgrade through the smart phone 20a after that, the smart phone 20a may transmit the upgrade request message to the management server (S117a).

When outputting the notification information as shown in S112a and S 1 15a, the air purifier 10a may display the original screen (i.e., standby mode) again (S115b).

Once receiving the upgrade request message, the management server 30 may transmit the installation instruction message to the air purifier 10a (S118a). After S118a, the air purifier 10a may prepare software installation. During the installation preparation, the air purifier 10a may transmit the installation start message to the management server 30 (S121a). If the software installation is not possible because the air purifier 10a is performing another function, S121a may proceed after the corresponding function ends. The management server 30 may transmit the installation start notification message to the smart phone 20a (S123a).

FIG. 12 is referred to hereinafter.

The air purifier 10a may display that the software installation is in progress (S122a).

Also, the smart phone 20a may output a message that the upgrade is proceeding currently (S124a). Once the upgrade is completed, the air purifier 10a may output a text indicating that the upgrade is completed (S122b) and transmit the installation complete message to the management server 30 (S41a).

The management server 30 may transmit the upgrade complete message to the smart phone 20a (S42a). The smart phone 20a may output a message indicating that the upgrade is completed (S43a). After that, the smart phone 20a may output a screen configured to control the upgraded function (S43b). The smart phone 20a may instruct the air purifier 10a to set or change the function (S43bb), and this may be transmitted to the air purifier 10a via the management server 30.

After S122a or S122b, once the upgrade is completed, the home appliance may perform re-boot.

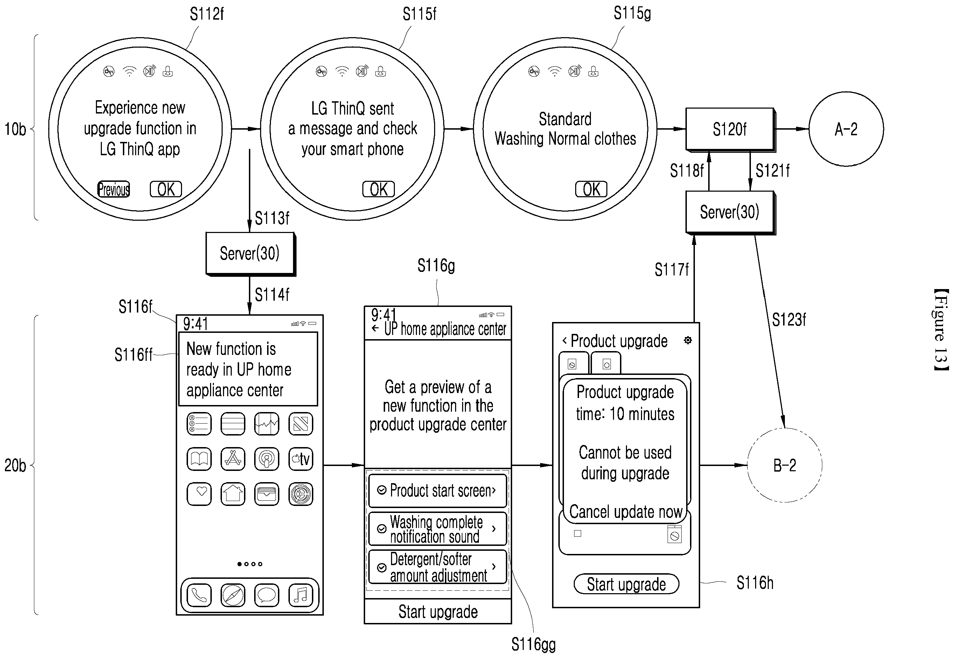

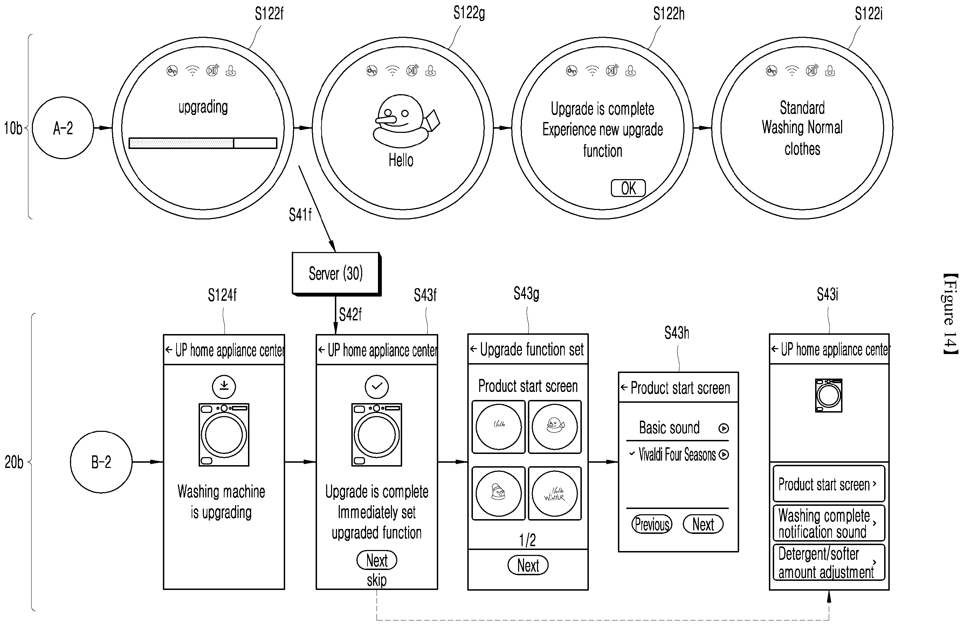

FIGS. 13 and 14 show an upgrade process of a washing machine according to an embodiment. In the detailed embodiment of the process shown in FIGS. 9 and 10, a series of alphabetic characters such as f, g and h may be written and displayed in the numeral references of each process. When the upgrade preparation is completed, the home appliance and the application of the smart phone may display that and the process of the upgrade under the control of the smart phone.

FIGS. 13 and 14 show a washing machine 10b as an embodiment and the present disclosure may not be limited thereto. In FIGS. 13 and 14, the user interface 140 of the home appliance may display notification information, which may be applied to an embodiment in which a separate input or selection is received. Alternatively, the user interface 140 of the home appliance may provide an interface configured to output new notification information after a predetermined time has elapsed.

FIG. 13 is referred to hereinafter.

Once the software download is completed in S31 to S32 of FIGS. 9 and 10, the washing machine 10b provided as the home appliance may output the notification information indicating that the upgrade is available to the user interface 140 of the washing machine 10b. after outputting first notification information (S112f), the washing machine 10b may transmit the first notification information output complete message to the management server 30 (S113f). When the user touches "confirm" area or after a predetermined time period has elapsed, the washing machine 10b may output second notification information (S115f).

The management server 30 may transmit the upgrade preparation message to the smart phone 20a (S114f). If the user selects "previous" area in S112f, the home appliance may check it and stop the repeated notification. The server 30 may receive a message for the selection of "previous" area and reflect it to the notification schedule in the future. The notification schedule may be set to output no more notification or reduce the number of repetitions.

At this time, the washing machine 10b may output the notification information when booting by the user or a specific condition. One example of the user interface 140 provided in the washing machine 10b may be a LCD display configured to display an air state or an operating state of the washing machine.

Before outputting the first notification information, the washing machine 10b may transmit the download complete message to the management server 30. According to another embodiment, the washing machine 10b may transmit the download complete message to the management server 30 after outputting the first and second notification information.

Once receiving the download complete message or the first notification information output complete message, the management server 30 may transmit a push message to the smart phone 20b in link with the washing machine 10b (S114f). The smart phone 20b may output a push message S116ff indicating that the upgrade is ready (S116f).

When the user selects the push message, description about the function to be upgraded may be displayed as shown in 116g. As instructed by S116gg, the names of three additional functions (e.g., a product start screen, a washing complete notification sound, detergent/softer input amount adjustment) to be upgraded and descriptions of each function may be displayed.

When the user selects to perform the upgrade through the smart phone 20b after that, the smart phone 20b may transmit the upgrade request message to the management server 30 (S117f).

When outputting the notification information as shown in S112f and S115f, the washing machine 10b may display the original screen (i.e., standby mode) again (S115g).

Once receiving the upgrade request message, the management server 30 may transmit the installation instruction message to the washing machine 10b (S118f). After S118f, the washing machine 10b may prepare software installation. During the installation preparation, the washing machine 10b may transmit the installation start message to the management server 30 (S121f).

If the software installation is not possible because the washing machine 10b is performing another function, S121f may proceed after the corresponding function ends. The management server 30 may transmit the installation start notification message to the smart phone 20b (S123f).

When the upgradeable software is registered in the server instead of the download completion point described the above embodiment, an installation alarm may be provided to the home appliance. If upgrade execution is instructed through the application on the user terminal, it is also possible to download and install the software from the management server.

As one example, S112f may be a screen displayed when new software is uploaded to the server. If the user selects an OK button on S112f, the software may be downloaded and upgraded.

Similarly, S116f may be screen displayed when new software is uploaded to the server.

FIG. 14 is referred to hereinafter.

The washing machine 10b may display that the software installation is in progress (S122f).

Also, the smart phone 20b may output a message that the upgrade is proceeding currently (S124f).

Once the upgrade is completed, the washing machine 10b may output a text indicating that the upgrade is completed (S122f and 122h) and transmit the installation complete message to the management server 30 (S41f). The washing machine 10b may display standby state screen(S122i). And the washing machine 10b may perform re-boot(122g).

The management server 30 may transmit the upgrade complete message to the smart phone 20b (S42f). The smart phone 20b may output a message indicating that the upgrade is completed (S43f). After that, the smart phone 20b may output a screen configured to control the upgraded function (S43g). The smart phone 20b may instruct the washing machine 10b to set or change the function (S43f and S43i), and this may be transmitted to the washing machine 10b via the management server 30.

If the user selects to skip in S43f of FIG. 14, the process may proceed to S43i.

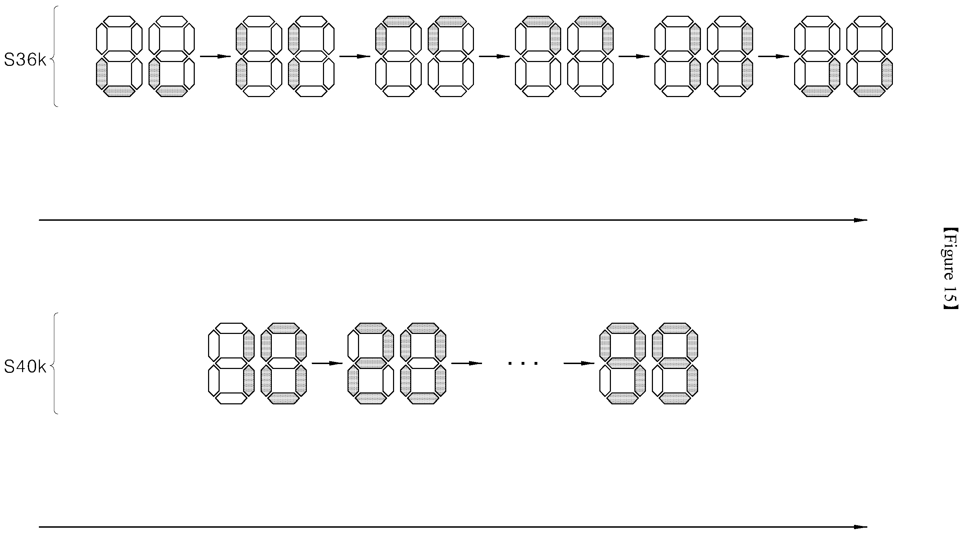

FIG. 15 shows an upgrade process of a washing machine according to another embodiment. FIG. 15 shows a process of displaying and performing an upgrade when the user interface of the washing machine is a 7-segment unit.

S36k of FIG. 15 shows a process displaying that the 7-segment of the washing machine is ready to upgrade. Based on the notification schedule, the number of rotations, the time, the number of repetitions, the notification sound, etc may be set.

When the upgrade is instructed in S116g and S117f by using the application of the smart phone, the 7-segment may display the upgrade process as 10, 20, ..., 99, etc as shown in S40k. Alternatively, the 7-segment may display the upgrade process as 1 to 99.

Additionally, the home appliance may repeat the process of S36k shown in FIG. 15 so that the user of the home appliance can easily check an upgrade preparation state.

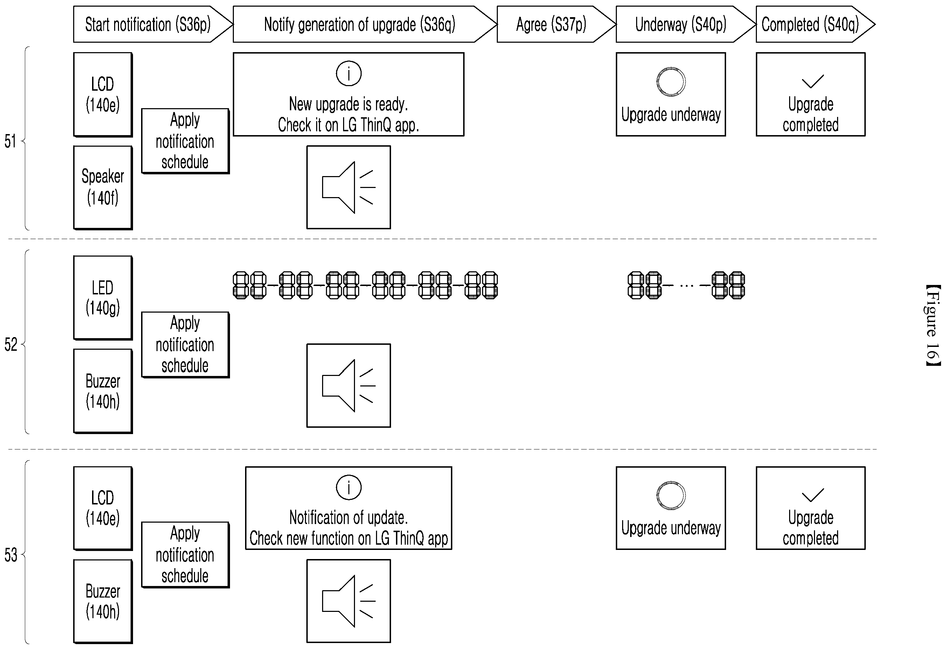

FIG. 16 is a view showing a method for outputting upgrade notification information according to an embodiment. FIG. 16 shows a process of performing a notification in the case where the user interface 140 of the home appliance provides both of a visual interface and an acoustic interface.

A visual method and an acoustic method may be applied to a method for notifying a new upgrade, depending on the characteristics of a home appliance. The user interface 140 of the home appliance may allow the user to easily see a situation where an upgrade proceeds by embodying a notification start method for notifying the user that there is an upgrade and a method for notifying the user that an upgrade proceeds and a method for notifying the user that an upgrade is completed in a different manner.

FIG. 16 shows each visual information and each acoustic information output by the interface 140 in a process of starting a notification (S36p), a case where the generation of an upgrade is notified (S36q), a case where the user agrees on an upgrade on an app of the user terminal 20 (S37p), a process of preceding with an upgrade (S40p) and a time point when an upgrade is completed (S40q).

In another embodiment, S37p may be performed by the home appliance 10. If the home appliance 10 provides a predetermined input interface, an agreement on and a selection of an upgrade in S37p may be performed by the home appliance 10.

Reference numeral 51 shows a notification process in the case where the user interface 140 of the home appliance comprises both of an LCD 140e and a speaker 140f.

Reference numeral 52 shows a notification process in the case where the user interface 140 of the home appliance comprises an LED 140g and a buzzer 140h.

Reference numeral 53 shows a notification process in the case where the user interface 140 of the home appliance comprises an LCD 140e and a buzzer 140h.

In relation to all the reference numerals 51, 52, 53, as software to be upgraded is downloaded completely, the LCD 140e and the speaker 140f are controlled to output a notification, based on a notification schedule of the home appliance 10, at the notification start step (S36p).

The notification schedule may indicate a time point when the home appliance is turned off within a certain period (e.g., 9 o'clock-21 o'clock and the like) every day for the first time after software is registered with the management server or after registered software is downloaded, as a notification start. Alternatively, the notification schedule may instruct a start of a notification in the case where a specific operation of the home appliance is performed.

For example, the home appliance may start to notify an upgrade in the case where the home appliance performs a predetermined notification such as the case where an automatic drying function is used, the case where a filter cleaning bot operates or the case where a filter change notification is generated and the like.

Alternatively, the home appliance may start to notify an upgrade in the case where the user approaches to the home appliance in addition to predetermined time. The case where the user approaches to the home appliance corresponds to a case where the user opens or closes the refrigerator, a case where the user opens or closes the door of the wash tub of a washing machine, a case where an air conditioner is turned on/off, a case where an electronic oven is turned on or turned off and the like.

Then the home appliance performs an upgrade generation notification (S36q).

In 51, the LCD 140e may display guide wording in relation an upgrade, and the speaker 140f may perform a voice guide regarding the guide wording in relation an upgrade. In this process, the speaker 140f may output a specific sound effect (e.g., a sound defined as an upgrade notification).

In 52, the LED 140g notifies that an upgrade is ready, as shown in S36k of FIG. 12. Likewise, the buzzer 140h may output a specific sound effect (e.g., a sound defined as an upgrade notification).

In 53, the LCD 140e may display guide wording in relation to an upgrade, and the buzzer 140h may output a specific sound effect (e.g., a sound defined as an upgrade notification). In the case where the LCD 140e has a small size, the LCD 140e may display short wording such as "upgrade notification".

Then the user may agree on an upgrade by using the user terminal 20 (S37p). Alternatively, the user may perform an upgrade by pressing a specific button of the home appliance 10.

Then in the process (S40p) where an upgrade proceeds, the LCD 140e may display the wording "Upgrade is underway". The LED 140g may display a state in which an upgrade proceeds as a number, as shown in S40k of FIG. 12. As the upgrade is completed, the LCD 140e may display the wording "Upgrade is completed". The LED 140g may stop animating.

In S40p-S40q, the speaker 140f and the buzzer 140h may not output a sound effect.

Alternatively, in S40p-S40q, the speaker 140f and the buzzer 140h may output a specific sound effect in relation to an upgrade. The speaker 140f may output the guide wording "Upgrade is underway".

Step 36 of FIG. 9 corresponds to step 112 and step 115 of FIG. 10, and step 40 of FIG. 9 corresponds to step 122 of FIG. 10. Likewise, the process of FIG. 16 may be applied in combination with the embodiments of FIG. 10.

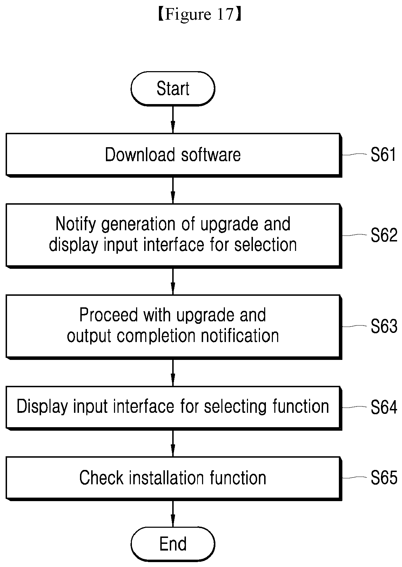

FIG. 17 is a view showing a process in which a home appliance performs an upgrade according to an embodiment. Unlike the above embodiment, an upgrade is performed without the user terminal.

The home appliance 10 downloads software (S61) and then displays an input interface for a selection while notifying the generation of an upgrade (S62). The input interface is to display an area that is touchable on a touch screen, or to show that a specific component (a button, a dial and the like) of the home appliance serves as a "confirmation button" instructing an upgrade.

Additionally, as the user selects the input interface, the home appliance proceeds with an upgrade, and then the home appliance outputs a notification indicating that an upgrade is completed (S63).

Additionally, the home appliance displays an input interface for selecting a function (S64). In the case where software installed provides one or more functions, the home appliance may display an input interface activating/not activating a corresponding function. The home appliance then confirms and enables/disables an installation function based on the user's selection (S65).

In S62, the management server 30 may transmit an output instruction message for instructing an output of an installation notification, based on the user's habit of using the home appliance or the on/off time of the home appliance. The management server 30 may transmit an output instruction message to the home appliance 10 at an optimal time point of an installation notification, based on a notification schedule.

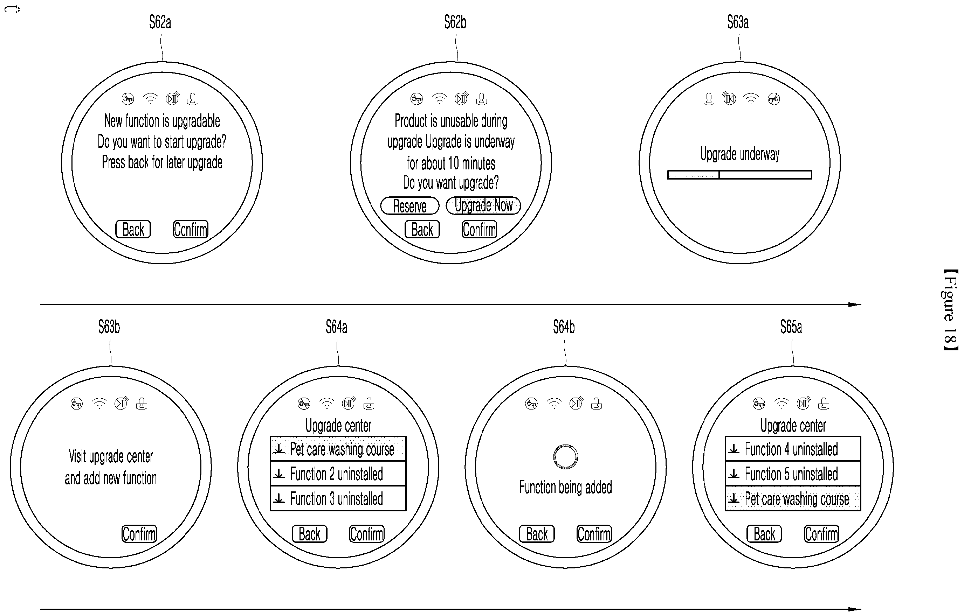

FIG. 18 is a view showing a process in which a home appliance using an LCD as a user interface of notifying and setting an upgrade according to an embodiment. In a specific embodiment of the process of FIG. 17, a series of alphabets such as a, b, c and the like are described together with the reference numeral of each process of FIG. 17.

In step 62a and step 62b, an interface notifying that an upgrade is ready and receiving a confirmation as to whether an upgrade proceeds from the user is displayed. A "confirm" button is displayed on a screen as an input interface. As the user touches the "confirm" area on the screen, the home appliance starts an upgrade. Without an LCD touch function, the home appliance may instruct a press of a specific button.

For example, in the case of a refrigerator, wording such as "Press a temperature confirm button for an upgrade" may be displayed. At this time, the temperature confirm button is an input interface. The user may proceed with an upgrade by pressing a button disposed on the door of the refrigerator.

Then the home appliance displays the upgrade process as shown in S63a and then displays the completion of the upgrade as shown in S63b. Then the home appliance displays S64a and S64b for installation of a function and completes a selection of a function as shown in S65a, based on the user's selection.

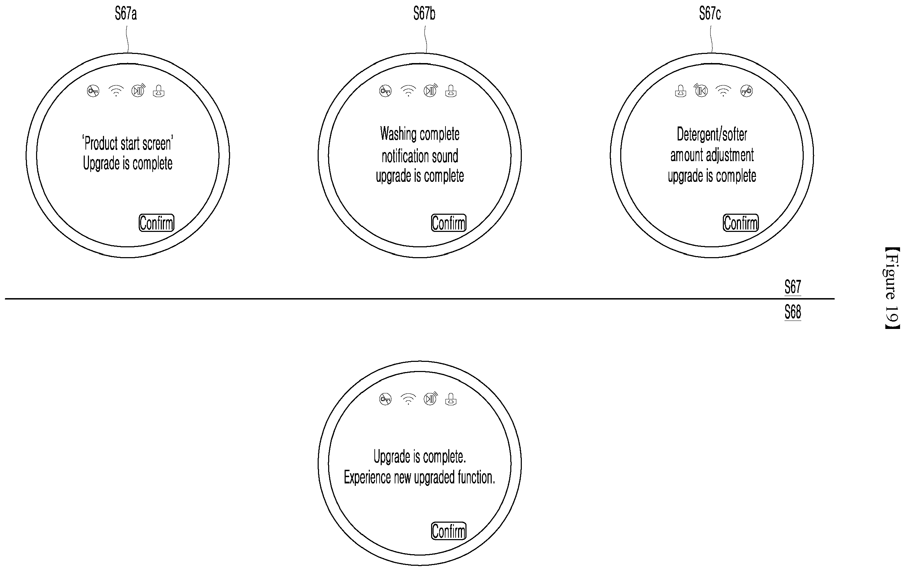

FIG. 19 shows a process of outputting information after upgrade of a home appliance according to an embodiment.

According to the number of characters that may be output on the interface of the home appliance, when there is one upgraded function, the corresponding function may be output as a guide text on the interface of the home appliance.

When there are plural upgraded functions, the corresponding functions may be continuously output as a guide text to the user interface 140 of the home appliance.

S67 of FIG. 19 show a configuration informing that three functional improvements have occurred as the result of the software upgrade. The user interface 140 of the device may sequentially display guide phrases for functions as in S67a, S67b and S67c. when the user touches "Confirm" area, the following function may be introduced.

If the user turns off the home appliance, without touching "Confirm" area, a guide message shown in S67c may be displayed in case of using the home appliance next time.

S68 shows a screen configured to allow the user terminal to check the contents when one function is upgraded or the upgraded contents are complicated.

In case of applying the above-described embodiments, the home appliance may notify that there is a new upgrade to the user through the user interface 140 or the application of the interworking user terminal.

If the user does not install an application for performing an upgrade function in the terminal, making it difficult to perform an operation in link with the application, an installation guide text message, a link for installation, a QR code and the like may be delivered to the user terminal.

Further, in the case where a problem occurs during installing upgrade or the process of upgrade is interrupted, in addition to the installation and process of a product upgrade, a notification indicating a completion, a message in relation to an upgrade error may be displayed at the product.

The home appliance may provide visual and audible notifications to users who do not use the terminal often if necessary. The home appliance may provide the upgrade notification by reflecting the characteristics thereof, and may also be upgraded based on the user's participation.

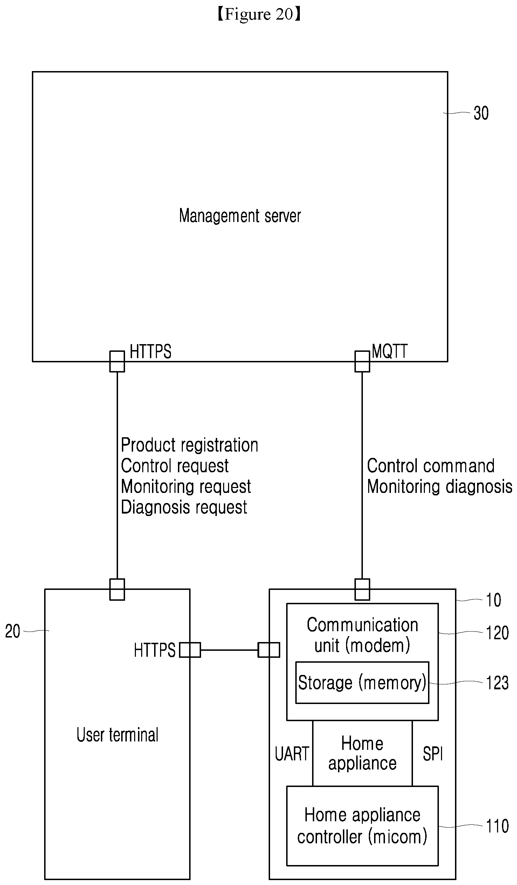

FIG. 20 shows specific communication among a management server, a home appliance and a user terminal according to an embodiment. Although only some components are indicated in the configuration of FIG. 2, the present disclosure is not limited thereto.

The management server 30 may be an upgrade server configured to store upgrade software and transmit it to the home appliance 10.

The user terminal 20 may be configured to set a network of the home appliance 10.

The home appliance 10 may include an electronic device that provides an IoT function. The home appliance 10 may include the communication unit 120 that is a modem as one example, and the home appliance controller 110 that is a microcomputer as one example. The communication unit may include the storage 123 that is a memory as one example.

The communication unit 120 and the home appliance controller 110 (or controller for short) may be configured to perform communication using a UART (Universal asynchronous receiver/transmitter) and SPI (Serial Peripheral Interface) communication protocol. In addition to UART or SPI, the communication unit 120 and the home appliance controller 110 may transceive information via communication protocols (e.g., various serial/parallel communication methods and synchronous/asynchronous communication method). The controller may include a function controller responsible for one or more functions of the home appliance and an interface controller configured to monitor functions of products such as LCD, LED speaker or buzzer and upgrade installation.

The management server 30 may communicate with the user terminal 20 using a Hypertext Transfer Protocol Secure (HTTPS) communication protocol. As one example, the management server 30 and the user terminal 20 may perform product registration, control request, monitoring request, diagnosis request, etc.

In addition, the management server 30 may perform communication using Message Queuing Telemetry transport (MQTT) communication protocols. As one example, the management server 30 and the home appliance 10 may perform control command, monitoring, diagnosis, etc. using MQTT. Particularly, when providing new upgrade notifications, the notification may be provided through not only the home appliance but also the user terminal such as the application of the smart phone, so that the user can easily check the new upgrade and information about the upgraded function.

In addition, the upgrade notification and the upgrade completion may be performed through the home appliance and it may be performed by correlating the home appliance and the user terminal, so that user convenience may be improved.

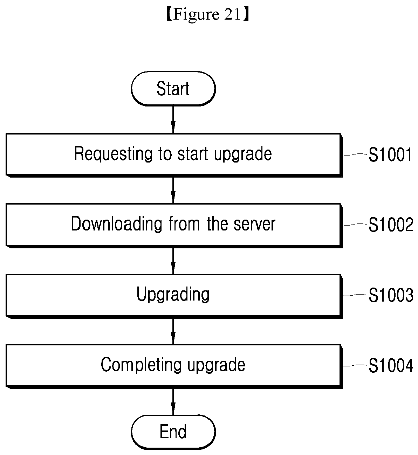

FIG. 21 shows an upgrade process according to another embodiment.

When the upgrade content to be applied to the home appliance is newly registered in the management server, the upgrade may be performed after selected and downloaded based on the flow chart of FIG. 21. This shows an embodiment in which the user selects and requests an upgrade before downloading to the home appliance and the download starts.

When software such as programs and data required for the upgrade is registered in the management server 30, the upgradeable software may be queried and a list of upgradable software may be displayed through the user interface 140 of the home appliance or the terminal interface 230 of the user terminal 20.

When the user selects one or more of upgradeable software through the user interface 140 of the home appliance 10 or the terminal interface 230 of the user terminal 20, the home appliance 10 or the user terminal 20 may requests the management server 30 to start the upgrade (S1001).

Hence, the home appliance 10 may download the selected software from the management server 30 (S1002). When the download is completed, the home appliance 10 may install and write the downloaded software in the home appliance controller 110 to proceed with the upgrade (S1003).

Once the upgrade is completed (S1004), the home appliance 10 may perform rebooting. The user interface 140 of the home appliance 10 or the terminal interface 230 of the user terminal 20 may notify or display the upgraded function. Even though all the components of the embodiments in the present disclosure are described as being combined into one component or operating in combination, embodiments are not limited to the embodiments set forth herein, and all the components can be selectively combined to operate within the scope of the purpose of the disclosure. All the components can be respectively implemented as an independent hardware, or some or all of the components can be selectively combined and can be embodied as a computer program including a program module that performs some or all functions combined into one or more hardware. Codes or code segments of the computer program can be easily inferred by those skilled in the art. The computer program can be stored in a computer-readable recording medium and can be read and executed by a computer, whereby the embodiments in the disclosure can be realized. Examples of a storage medium of the computer program include storage mediums including a magnetic recording medium, an optical recording medium and a semiconductor recording element. The computer program for realizing the embodiments in the disclosure includes a program module which is transmitted via an external device in real time.

The embodiments are described above with reference to a number of illustrative embodiments thereof. However, the present disclosure is not intended to limit the embodiments and drawings set forth herein, and numerous other modifications and embodiments can be devised by one skilled in the art. Further, the effects and predictable effects based on the configurations in the disclosure are to be included within the range of the disclosure though not explicitly described in the description of the embodiments.

### [Numeral Description]

| | | | |
|---|---|---|---|
| 10: | Home appliance | 20: | User terminal |
| 30: | Management server | 110: | Home appliance controller |
| 140: | User interface | | |

## Claims

1. A method for upgrading a home appliance, comprising:
outputting a notification for installing software in a home appliance by the home appliance; and
instructing installation of the software in the home appliance by an application of a user terminal in link with the home appliance.

2. The method of claim 1, comprising:
selecting corresponding software from a server and downloading the software, based on the installation instruction; and
installing the downloaded software in the home appliance.

3. The method of claim 1, wherein the method further comprises selecting corresponding software out of software downloaded in the home appliance in advance from a server, based on the installation instruction, and installing the software in the home appliance by the home appliance.

4. The method of claim 1, wherein the notification notifies any one of a availability of an upgrade, an installation process, completion of installation and a stop of installation.

5. A home appliance software of which is upgraded, comprising:
a communication unit configured to communicate with a management server and to receive software transmitted to be upgraded;
a storage configured to store the software transmitted;
a user interface configured to output a notification for installing the software in the home appliance; and
a controller configured to installed the software stored.

6. A method for upgrading a home appliance, comprising:
transmitting software to a home appliance by a management server;
transmitting an output instruction message for instructing an output of an installation notification of the software to the home appliance by the management server; and
outputting the installation notification by the home appliance.

7. The method of claim 6, wherein the method further comprises repeatedly outputting the installation notification, based on a notification schedule, by the home appliance.

8. The method of claim 6, wherein the method further comprises downloading the software from the management server by the home appliance; and
as the software is downloaded completely, transmitting a download completion message to the management server and then receiving the output instruction message by the home appliance.

9. The method of claim 6, wherein the method further comprises transmitting a download instruction message for instructing a download of the software to the home appliance by the management server before the transmitting of the software.

10. The method of claim 6, wherein the method further comprises transmitting an installation instruction message for instructing installation of the software to the home appliance by the management server, after the transmission of the output instruction message.

11. The method of claim 10, transmitting an installation instruction message, comprising:
transmitting an upgrade ready message of the software to a user terminal in link with the home appliance and then receiving an upgrade request message for requesting installation of the software from the user terminal by the management server; and
transmitting the installation instruction message to the home appliance, based on the upgrade request message, by the management server.

12. The method of claim 10, further comprising;
outputting first notification information and then transmitting an output completion message of the first notification information to the management server by the home appliance before the management server transmits the installation instruction message;
transmitting an upgrade ready message of the software to a user terminal in link with the home appliance by the management server; and
receiving an upgrade request message for requesting installation of the software from the user terminal by the management server.

13. The method of claim 10, wherein the method further comprises installing the software after receiving the installation instruction message and transmitting the installation completion message to the management server as the software is installed completely by the home appliance.

14. The method of claim 12, wherein the method further comprises transmitting an upgrade completion message to the user terminal after receiving the installation completion message by the management server.

15. A home appliance, comprising:
a communication unit configured to communicate with a management server and to download software to be installed in a home appliance;
a controller configured to install the software; and
a user interface configured to output notification information in relation to installation of the software,
wherein as the communication unit receives an output instruction message for instructing an output of an installation notification of the software from the management server, the user interface outputs the installation notification under control of the controller.

16. The home appliance of claim 15, wherein the controller controls the user interface based on a notification schedule, and
the user interface repeatedly outputs the installation notification based on the notification schedule.

17. The home appliance of claim 15, wherein as the software is downloaded completely, the communication unit transmits a download completion message to the management server and then receives the output instruction message.

18. The home appliance of claim 15, wherein the communication unit receives a download instruction message for instruction a download of the software from the management sever, and
the user interface outputs a download state of the software to the user interface under control of the controller.

19. The home appliance of claim 15, wherein after the user interface outputs the installation notification, the communication unit receives an installation instruction message for instructing installation of the software from the management server, and
the controller installs the software.

20. The home appliance of claim 19, wherein as a user terminal in link with the home appliance instructs the management server to install the software, the communication unit receives the installation instruction message from the management server.

21. The home appliance of claim 19, wherein before the communication unit receives the installation instruction message, the user interface outputs first notification information, and then the communication unit transmits an output completion message of the first notification information to the management server.

22. The home appliance of claim 19, wherein the controller transmits an installation completion message to the management server by controlling the communication unit as the software is installed completely.

23. The home appliance of claim 19, wherein the user interface outputs an installation state of the software under control of the controller.

24. The home appliance of claim 15, the user interface, comprising:
an output interface comprising any one or more of an LED segment, an LCD display, a buzzer and a speaker that are attached to the home appliance and configured to perform a visual or acoustic notification; and
an input interface comprising any one or more of a button, a touch of a touch screen, a dial, and a slide bar that instruct an operation of the home appliance.

25. A management server, comprising:
a server communication unit configured to transmit software to be installed in a home appliance to the home appliance; and
a server controller configured to generate an output instruction message for instructing the home appliance to output an installation notification message of the software and to control the server communication unit to allow the server communication unit to transmit the output instruction message.

26. The management server of claim 25, wherein the server communication unit receives a download completion message indicating the software is transmitted completely from the home appliance, and then transmits the output instruction message to the home appliance.

27. The management server of claim 25, wherein the communication module transmits a download instruction message for instructing a download of the software to the home appliance.

28. The management server of claim 25, wherein the server communication unit transmits an installation instruction message for instructing installation of the software to the home appliance.

29. The management server of claim 28, wherein the server communication unit transmits an upgrade ready message to a user terminal in link with the home appliance and then receives an upgrade request message for requesting installation of the software from the user terminal, and
the server communication unit transmits the installation instruction message to the home appliance, based on the upgrade request message.

30. The management server of claim 28, wherein before the server communication unit transmits the installation instruction message, the server communication unit receives an output completion message of first notification information from the home appliance and then transmits an upgrade ready message of the software to a user terminal in link with the home appliance, and
the server communication unit receives an upgrade request message for requesting installation of the software from the user terminal.

31. The management server of claim 28, wherein the server communication unit receives an installation completion message from the home appliance.
